# FASCICULE DE BREVET EUROPEEN

(11) **EP 3 381 869 B1**
(45) Date de publication et mention de la délivrance du brevet: **26.02.2020**
(21) Numéro de dépôt: 18164471.7
(22) Date de dépôt: 28.03.2018
(51) Int. Cl.: C03B 9/447, C03B 40/00, B25J 15/00, B25J 15/02

(54) **PINCE D'EXTRACTION DE CONTENANTS ET MACHINE DE FABRICATION DE CONTENANTS INCORPORANT UNE TELLE PINCE**
ZANGE ZUR EXTRAKTION VON BEHÄLTERN, UND MASCHINE ZUR HERSTELLUNG VON BEHÄLTERN, DIE MIT EINER SOLCHEN ZANGE AUSGESTATTET IST
CONTAINERS EXTRACTION CLAMP AND CONTAINERS MANUFACTURING MACHINE INCORPORATING SUCH A CLAMP

(30) Priorité: 29.03.2017 FR 1752632
(43) Date de publication de la demande: 03.10.2018
(73) Titulaire: A et L Rondot, 69410 Champagne-au-Mont-d'Or (FR)
(72) Inventeur: ROSSIGNOL, Stéphane, 69380 LISSIEU (FR)
(74) Mandataire: Lavoix

(56) Documents cités:
- WO-A1-2013/041067
- US-A1- 2006 230 789
- STEWART D R ET AL: "SPECIALIZATION COMES TO HOT GLASS HANDLING", GLASS INDUSTRY, GLASS INDUSTRY MAGAZINE. NEW YORK, US, vol. 70, no. 5, 1 avril 1989 (1989-04-01), pages 20-22, XP000023602, ISSN: 0017-1026

## Description

L'invention a trait à une pince d'extraction de contenants, tels que des bouteilles, à utiliser dans une machine de fabrication de contenants bouteilles.

Au sens de la présente invention, une bouteille est un contenant en verre pourvu d'un col formant goulot. Un contenant en verre peut être une bouteille ou un flacon destiné à contenir un liquide, tel qu'un vin ou spiritueux, un parfum. Un contenant en verre peut également être un flacon ou un pot destiné à contenir un produit pâteux, un gel ou un matériau granulaire, tel qu'une poudre cosmétique. Un contenant est équipé d'un col à travers lequel son contenu peut être introduit ou versé à l'extérieur. Dans le cas d'une bouteille ou d'un flacon, ce col peut former un goulot. Dans le cas d'un pot, ce col peut former son embouchure.

Lors de la fabrication de bouteilles, il est connu d'injecter dans un moule de conformation une quantité de pâte contenant de la silice et de mouler cette quantité de pâte à la forme souhaitée pour la bouteille, au sein d'un moule de conformation. Au terme du processus de moulage, le col de la bouteille dépasse du moule et il est connu d'utiliser une pince formée de deux mâchoires pour extraire la bouteille du moule de conformation en engageant des bras de chacune des mâchoires sous une collerette entourant le col de la bouteille.

D'autres contenants en verre, sont fabriqués selon le même principe.

Lorsque les mâchoires de la pince sont réalisées de façon monobloc, notamment en bronze, il existe un risque de choc thermique lors de la saisie du col d'un contenant par une telle pince. En effet, le contenant est à une température de l'ordre de 700°C, alors que la pince est à une température de l'ordre de 70°C. Cette différence de température peut générer des fêlures de surface, ce phénomène étant connu sous le nom de « glaçure ».

Pour pallier cet inconvénient, il est connu de réaliser chaque mâchoire d'une pince d'extraction avec un support en métal et un insert en graphite monté sur le support et destiné à constituer l'interface entre la mâchoire et le col du contenant. Cette approche présente l'avantage que l'insert en graphite a une inertie thermique moindre qu'une pièce en métal, ce qui permet une élévation rapide de sa température et limite les risques de choc thermique.

Il est connu de US-A-2006/230 789 de monter un insert flottant sur un support de pince d'extraction, la face avant de l'insert devant correspondre précisément à la géométrie du col des contenants à extraire.

Avec cette approche, il est nécessaire de disposer d'un stock de pinces dont les inserts sont adaptés au diamètre et à la géométrie de chacun des cols des contenants à fabriquer sur une machine, ce qui impose une gestion complexe d'un stock de pinces et une immobilisation financière significative. En outre, selon cette approche, il n'est pas réellement possible de tenir compte des tolérances de fabrication des contenants qui peuvent avoir une influence sur le diamètre effectif de leur col.

C'est à ces inconvénients qu'entend plus particulièrement remédier l'invention en proposant une nouvelle pince d'extraction de contenants par rapport à un moule de conformation, cette pince pouvant travailler avec des contenants dont les cols présentent des diamètres différents, tout en présentant des conditions d'utilisation compatibles avec une exploitation industrielle.

A cet effet, l'invention concerne une pince d'extraction de contenants par rapport à un moule de conformation, cette pince comprenant deux mâchoires disposées de part et d'autre d'un axe central de la pince et incluant chacune un support et un insert monté flottant sur ce support, en étant mobile en translation par rapport au support selon une direction radiale à l'axe central. Conformément à l'invention, pour chaque mâchoire, l'insert est équipé d'au moins d'une gorge de réception et de coincement d'une garniture, alors qu'une garniture compressible est engagée dans chaque gorge pour constituer une interface de prise du col d'un contenant.

Grâce à l'invention, le caractère mobile en translation de l'insert selon la direction radiale à l'axe central permet de définir entre les deux mâchoires de la pince un espace de dimension variable pour la réception et le coincement du col d'un contenant. La pince permet donc de travailler avec des cols de diamètres différents. En outre, la garniture compressible permet d'ajuster également le volume disponible pour un col de contenant situé entre les deux mâchoires de la pince. Comme la garniture est engagée dans la gorge de l'insert, elle n'a pas à être soudée ou collée sur l'insert. Elle peut donc être facilement changée lorsqu'elle est usée, ce qui permet de réaliser des opérations de maintenance de la pince sur son site d'exploitation, avec une interruption de courte durée du cycle de fonctionnement d'une machine de fabrication de contenants.

Selon des aspects avantageux mais non obligatoires de l'invention, une telle pince d'extraction peut incorporer une ou plusieurs des caractéristiques suivantes, prises selon toute combinaison techniquement admissible :
- La garniture est engagée de façon amovible dans la gorge.
- La gorge est en forme de tronçon d'arc de cercle, avec une profondeur comprise entre 2 et 3 mm.
- La gorge est équipée, au voisinage de ses extrémités, d'organes de retenue de la garniture, de préférence formés par des goupilles traversant la gorge selon une direction parallèle à l'axe central.
- La garniture est à section polygonale, notamment carrée, dont la une dimension transversale est comprise entre 110% et 130% de la largeur de la gorge, ce qui garantit le serrage de la garniture dans la gorge.
- La garniture est une tresse en fils dont le diamètre est compris entre 0,1 et 0,3 mm, de préférence égal à environ 0,15 mm, et qui sont réalisés en métal, de préférence en acier, ou en matériau synthétique, notamment aramide ou para-aramide.
- Un premier organe, parmi le support et l'insert, est pourvu d'au moins une nervure, de préférence deux nervures, et le deuxième organe, parmi le support et l'insert, est pourvu d'une rainure de réception de chaque nervure, une nervure et la rainure associée formant des organes de guidage en translation de l'insert par rapport au support, selon la direction radiale.
- La mâchoire comprend un organe de charge élastique de l'insert en direction de la mâchoire opposée, notamment un ressort travaillant en compression et intercalé entre le support et l'insert, et au moins un organe de limitation de la course de déplacement de l'insert par rapport au support, notamment une goupille solidaire de l'insert et engagée dans un logement ménagé dans le support, ou une structure inverse.
- Le support a une géométrie adaptée au diamètre des cols des contenants à extraire.

Selon un autre aspect, l'invention concerne une machine de fabrication de contenants, cette machine comprenant au moins un moule de conformation pour des contenants, ainsi qu'un mécanisme d'extraction de contenants par rapport à ce moule. Conformément à l'invention, le mécanisme d'extraction comprend au moins une pince telle que mentionnée ci-dessus.

L'invention sera mieux comprise et d'autres avantages de celle-ci apparaîtront plus clairement à la lumière de la description qui va suivre, d'un mode de réalisation d'une machine et de deux modes de réalisation d'une pince conformes à son principe, donnée uniquement à titre d'exemple et faite en référence aux dessins annexés, dans lesquels :
- la figure 1 est une représentation schématique de principe d'une machine de fabrication de bouteilles conforme à l'invention incluant un mécanisme d'extraction de bouteilles qui comprend une pince conforme à l'invention ;
- la figure 2 est une vue en perspective éclatée de la pince du mécanisme d'extraction de la machine de la figure 1 et du col d'une bouteille avec lequel cette pince est sensée collaborer ;
- la figure 3 est une coupe en perspective selon la ligne III-III à la figure 2 ;
- la figure 4 est une vue en perspective du col de la bouteille et d'une des mâchoires de la pince des figures 2 et 3 lorsque cette mâchoire interagit avec ce col ;
- la figure 5 est une vue en perspective d'un support de la mâchoire de la figure 4 ;
- la figure 6 est une vue en perspective, selon un autre angle, d'un insert de la mâchoire de la figure 4 ;
- la figure 7 est une vue en perspective, selon un angle différent de celui de la figure 4, de la mâchoire de la figure 4 utilisée avec un col dont le diamètre présente une première valeur ;
- la figure 8 est une coupe selon le plan VIII à la figure 7 ;
- la figure 9 est une coupe selon la ligne IX-IX à la figure 8 ;
- la figure 10 est une vue à plus grande échelle du détail X à la figure 9 ;
- la figure 11 est une vue en perspective par le dessous des pièces représentées aux figures 7 à 10 ;
- la figure 12 est une vue de dessous des pièces représentées aux figures 7 à 10 ;
- la figure 13 est une vue analogue à la figure 7 lorsque la mâchoire est utilisée avec un col de diamètre plus petit que celui représenté aux figures 7 à 12 ;
- la figure 14 est une coupe selon le plan XIV à la figure 13 ;
- la figure 15 est une coupe selon la ligne XV-XV à la figure 14 ;
- la figure 16 est une vue à plus grande échelle du détail XVI à la figure 15 ;
- la figure 17 est une vue en perspective par le dessous des pièces représentées aux figures 13 à 16 ;
- la figure 18 est une vue de dessous des pièces représentées aux figures 13 à 17;
- la figure 19 est une vue analogue à la figure 7 pour une pince conforme à un deuxième mode de réalisation utilisé avec un col de diamètre plus grand que celui représenté aux figures 13 à 18 ;
- la figure 20 est une vue analogue à la figure 9 pour la pince de la figure 19 et
- la figure 21 est une vue analogue à la figure 12 pour la pince de la figure 19.

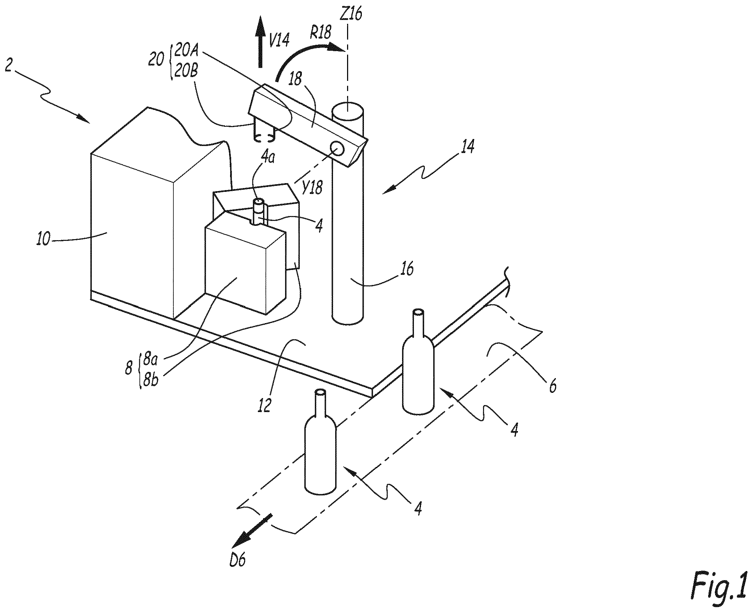

La machine 2 représentée à la figure 1 sert à la fabrication de bouteilles 4 qui sont déplacées par un convoyeur 6 selon une direction de convoyage D6. La machine 2 comprend un moule de conformation 8 formé de deux demi-moules 8a et 8b pouvant prendre une configuration fermée, dans laquelle ils isolent une empreinte définie entre eux de l'extérieur, et une position ouverte représentée à la figure 1. Un ensemble d'alimentation 10 appartient à la machine 2 et permet d'alimenter le moule 8 avec des ébauches formées dans un moule ébaucheur, selon une méthode connue en soi.

Le moule 8 et l'ensemble d'alimentation 10 sont montés sur un châssis 12 de la machine 2.

Un mécanisme d'extraction 14 est également monté sur le châssis 12 et comprend un mât 16 définissant un axe vertical Z16 et supportant un bras 18 à l'extrémité duquel est montée une pince 20 formée de deux mâchoires 20a et 20b. La pince 20 est prévue pour pincer le col 4a d'une bouteille 4 se trouvant dans le moule 8, à l'ouverture de ce moule, pour extraire cette bouteille de l'empreinte du moule par un mouvement R18 de rotation du bras 18 autour d'un axe horizontal Y18. Ceci permet de déplacer une bouteille 4 de l'intérieur du moule 8 jusque sur le convoyeur 6.

Le bras 18 est équipé de moyens mécaniques de rapprochement/éloignement des mâchoires 20a et 20b respectivement pour saisir le col 4a d'une bouteille 4 dans le moule 8 et pour relâcher ce col lorsque la bouteille est posée sur le convoyeur 4.

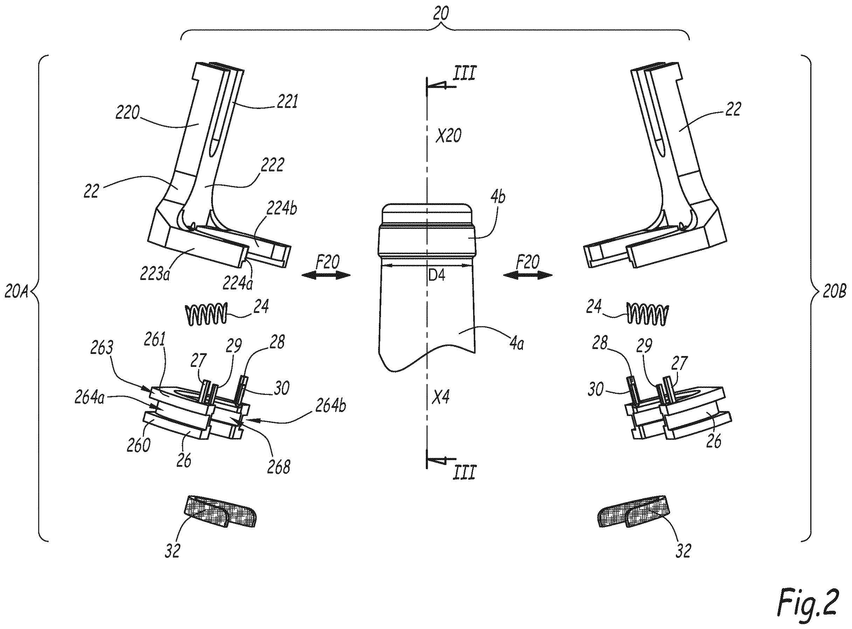

La pince 20 est représentée, en configuration éclatée, de part et d'autre du col 4a d'une bouteille 4, à la figure 2.

Sur les figures 2 et suivantes, seul le col 4a d'une bouteille est représenté, pour la clarté du dessin, même si ce col se prolonge en réalité vers le bas, pour former le corps de la bouteille 4. On note X4 un axe longitudinal de la bouteille 4.

On note, par ailleurs, X20 un axe central de la pince 20 de part et d'autre duquel sont disposées les mâchoires 20A et 20B, lesquelles sont mobiles en rapprochement/éloignement selon une direction radiale à cet axe, comme représenté par les flèches F20 sur cette figure. En configuration de fonctionnement de la pince 20, les axes X4 et X20 sont confondus.

La mâchoire 20A comprend un support 22 réalisé en acier avec deux pattes 220 et 221 d'accrochage sur les moyens mécaniques de rapprochement/éloignement incorporés au bras 18 et permettant le déplacement de la mâchoire 20A dans le sens de la flèche F20, radialement à l'axe X20. Les pattes 220 et 221 sont monobloc avec un dos plan 222 de la mâchoire 20A. Le support 22 comprend également une semelle 223 perpendiculaire au dos 222 et qui est formée de deux bras 223a et 223b ménagés de part et d'autre d'une ouverture généralement en forme de moitié de disque. On note 224 le bord de la semelle 223 qui jouxte cette ouverture, ce bord étant en forme de nervure double avec une épaisseur e224 mesurée perpendiculairement à la semelle 223 qui est égale à environ 4,5 mm.

La double nervure formant le bord 224 comprend une première nervure 224a qui jouxte le bras 223a et une deuxième 224b qui jouxte le bras 223b.

Le support 22 est pourvu d'un logement borgne 226 de réception partielle d'un ressort 24. Ce logement débouche du côté du bord 224.

Chacun des bras 223a et 223b est percé, au voisinage de son extrémité opposée au dos 222, d'une lumière traversante 228 qui est oblongue, avec sa plus grande dimension perpendiculaire au dos 222.

La mâchoire 20a comprend également un insert 26 réalisé en acier et qui est pourvu, sur l'extérieur, d'une rainure double formée d'une première rainure 264a et d'une deuxième rainure 264b destinées à coiffer respectivement la première nervure 224a et la deuxième nervure 224b.

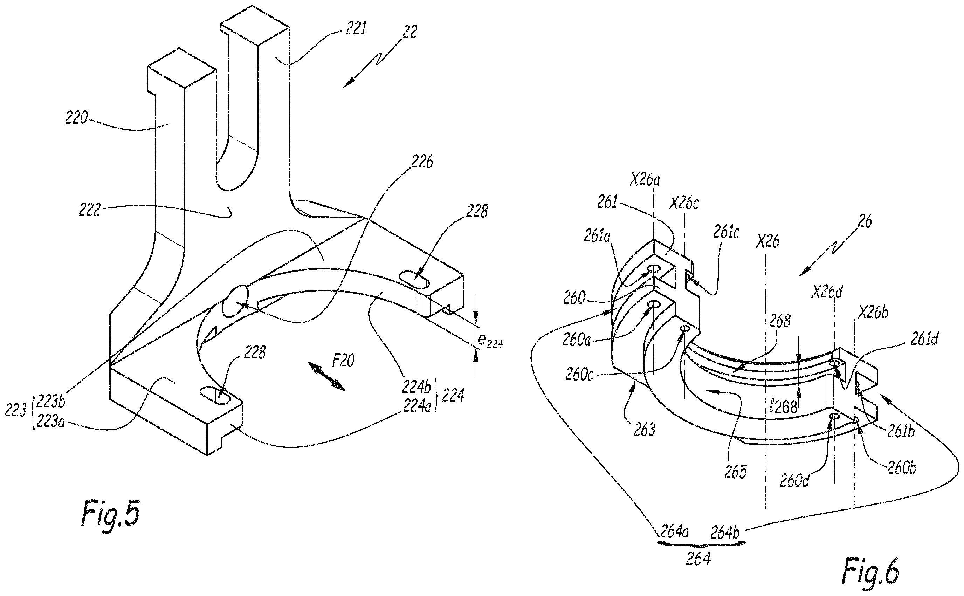

Ainsi, la présence des nervures 224a et 224b sur le support 22, d'une part, et des rainures 264a et 264b sur l'insert 26, d'autre part, permet à l'insert 26 de coulisser par rapport au support 22, en translation dans le sens des flèches F20 aux figures 2 et 5, c'est-à-dire radialement à l'axe X20 et à l'axe X4.

Ceci permet d'adapter la position relative des pièces 22 et 26 en fonction du diamètre D4 du col de la bouteille 4 mesuré juste au-dessous d'une collerette 4b de ce col.

On note respectivement 260 et 261 les deux voiles de l'insert 26 entre lesquels sont définies les rainures 264a et 264b. Les deux voiles 260 et 261 sont percés de deux séries d'orifices 260a et 260b, respectivement 261a et 261b. Les orifices 260a et 261a sont alignés selon un axe X26a parallèle à l'axe X20 en configuration montée de la pince 20, alors que les orifices 260b et 261b sont alignés selon un axe X26b parallèle à l'axe X26a.

La mâchoire 20A comprend également deux goupilles 27 et 28. En configuration montée de la mâchoire 20A, la goupille 27 est insérée simultanément dans les orifices 260a et 261a et dans la lumière 228 du bras 223a. D'autre part, dans cette configuration montée, la goupille 28 est insérée dans les orifices 260b et 261b et dans la lumière 228 du bras 223b. Dans ces conditions, le déplacement de l'insert 26 dans le sens de la double flèche F20 est limité par le déplacement des goupilles 27 et 28 dans les lumières 228.

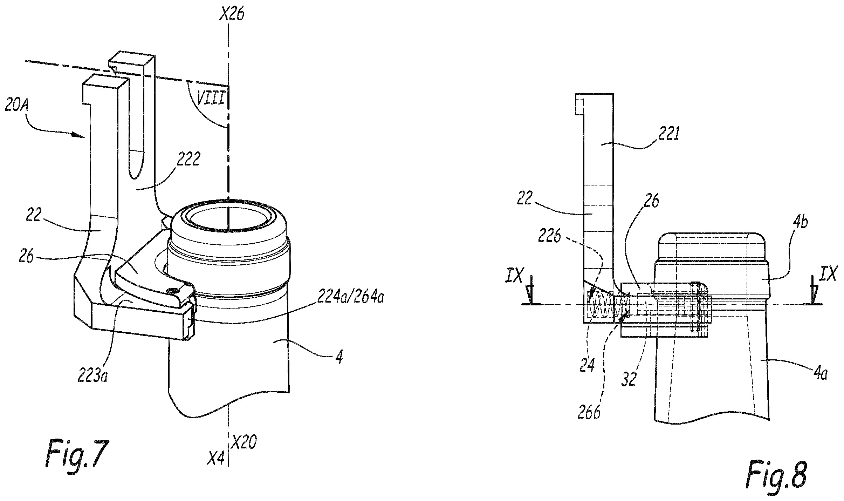

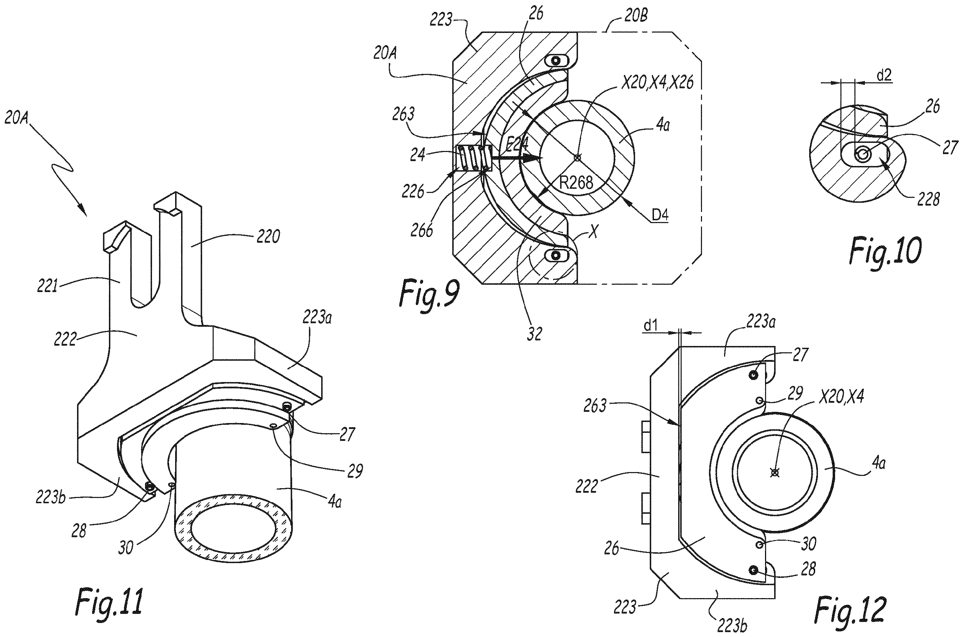

On note 263 la face arrière de l'insert 26 opposée aux orifices 260a, 206b, 261a et 261b. Comme visible notamment aux figures 8 et 9, l'insert 26 est pourvu d'un logement borgne 266, qui débouche sur cette face arrière.

D'autre part, le ressort 24 est inséré dans les logements borgnes 226 et 266. Ainsi, le déplacement de l'insert 26 sur le support 22, dans un sens de rapprochement de la surface 263 et du dos 22, a lieu moyennant une compression du ressort 24, ce ressort exerçant un effort élastique E24 qui repousse l'insert 26 à l'opposé du dos 222. Le mouvement de l'insert 26 dans le sens de la flèche F20 en éloignement de la surface 263 par rapport au dos 222 est limité par la venue en butée des goupilles 27 et 28 contre les extrémités des lumières 228 les plus éloignées du dos 222.

A l'opposé de la face arrière 263, c'est-à-dire sur sa face avant 265, l'insert 26 est pourvu d'une gorge 268 qui est en forme de tronçon d'arc de cercle centré sur un axe X26 qui est parallèle aux axes X4 et X20 en configuration d'utilisation de la pince 20.

A proximité des extrémités de la gorge 268, les voiles 260 et 261 sont respectivement percés d'orifices 260c, 260d, 261c, 261d. Les orifices 260c et 261c sont alignés sur un axe X26c parallèle à l'axe X26a, alors que les orifices 260d et 261d sont alignés sur un axe X26d parallèle à l'axe X26b.

Les axes X26, X26a, X26b, X26c et X26d sont parallèles entre eux et aux axes X4 et X20.

Deux goupilles 29 et 30 sont respectivement engagées dans les orifices 260c et 261c, respectivement 260d et 261d.

On note t268 la largeur de la gorge 268, c'est-à-dire la dimension de cette gorge mesurée parallèlement à l'axe X26. Cette largeur est comprise entre 3,5 et 4,5 mm, de préférence égale à environ 4 mm.

Une garniture 32, formée par une tresse en fils d'acier, est engagée dans la gorge 268 et retenue dans celle-ci par coopération de formes. La garniture 32 subit, de la part du col 4a, un effort qui tend à la plaquer contre le fond de la gorge 268. Ainsi, la garniture 32 n'a pas tendance à être éjectée hors de la gorge 268.

La garniture 32 est compressible, en ce sens qu'elle peut se déformer élastiquement, sous l'action du col 4a d'une bouteille 4, lors de l'application d'un effort de la pince 20 autour de ce col. Le caractère compressible de la garniture 32 découle de son mode de fabrication par tressage de fils.

En variante, un métal autre que de l'acier peut être utilisé pour réaliser la tresse formant la garniture 32.

Selon une autre variante, un matériau synthétique peut être utilisé, notamment de l'aramide ou un para- aramide tel que du poly(p-phénylènetéréphtalalamide) ou PPD-T, également connu sous la marque déposée KEVLAR, ou du poly(m-phenyleneisophtalamide) ou du MFD-I, également connu sous la marque déposée NOMEX.

Selon encore une autre variante, la tresse 32 peut être obtenue par tressage de fils de compositions différentes, par exemple un mélange de fils en aramide et de fils en inox.

Quelle que soit la nature des fils utilisés, leur diamètre est avantageusement compris entre 0,1 et 0,3 mm.

De préférence, la garniture 32 est réalisée dans une tresse à section carrée dont on note h32 la hauteur, c'est-à-dire la longueur d'une de ses arêtes en configuration non contrainte.

Cette hauteur h32 est choisie entre 110% et 130% de la largeur ℓ268, ce qui permet à la fois une mise en place aisée de la garniture 32 dans la gorge 268 et un maintien en position par coincement. Les goupilles 29 et 30 obturent les extrémités de la gorge 268 opposées à la paroi arrière 263 et s'opposent à un glissement de la garniture 32 vers l'extérieur de la gorge 268, selon une direction parallèle à la flèche F20.

En variante, on peut utiliser une garniture 32 à section autre que carrée, notamment rectangulaire et, de façon plus générale, polygonale, régulière ou irrégulière.

Quelle que soit sa géométrie, les dimensions transversales de la garniture 32 sont choisies pour que, lorsqu'elle est montée dans la gorge 268, cette garniture 32 dépasse radialement de la gorge, en direction de l'axe X26. Ainsi, la garniture 32 constitue l'interface de prise du col 4a de la bouteille 4 lorsque la mâchoire 20 est serrée autour de ce col 4.

On note p268 la profondeur de la gorge 268. Cette profondeur est comprise entre 40% et 60% de la largeur t268 de la gorge 268. La hauteur h32 de la garniture 32 non contrainte est, quant à elle, supérieure à la profondeur p268, ce qui permet à la garniture 32 de dépasser de la gorge 268 en direction de l'axe X26.

On note R268 le rayon de la gorge 268, mesuré en fond de gorge. Ce rayon a une valeur comprise entre 18 et 20 mm, de préférence égale à 19 mm environ.

La mâchoire 20B est identique à la mâchoire 20 et comprend également un support 22, un ressort 24, un insert 26, des goupilles 27, 28, 29 et 30 et une garniture 32, chacune de ces pièces étant identique à la pièce portant la même référence dans la mâchoire 20A.

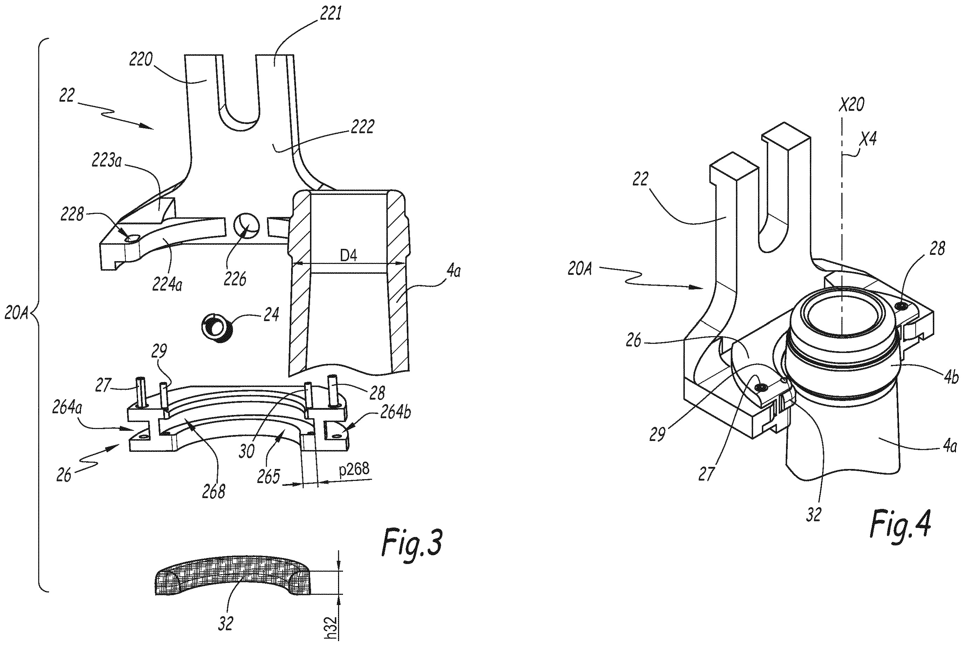

Sur les figures 4, 7, 8, 11 et 12, seule la mâchoire 20A est représentée, étant précisé que la mâchoire 20B est disposée, par rapport à la mâchoire 20A, de façon symétrique aux axes X4 et X20 confondus.

Dans la configuration des figures 7 à 12, le diamètre D4 du col 4a vaut 28 mm environ, de préférence 28,3 mm. Dans ce cas, lorsque les mâchoires 20A et 20B sont resserrées autour de ce col 4, comme représenté à la figure 9 où la trace de la mâchoire 20b est visible en pointillés, le col 4a comprime la garniture 32 dans la gorge 268 et repousse l'insert 26 à l'encontre de l'effort élastique exercé E4 par le ressort 24. Dans ce cas, comme visible à la figure 12, la distance entre la face arrière 263 de l'insert 26 et le dos 222 du support 22 a une valeur d1 qui est comprise entre 0,5 et 1 mm, de préférence entre 0,6 et 0,7 mm.

Par ailleurs, une distance d2, mesurée parallèlement au plan de la figure 8, entre la goupille 27 et l'extrémité de la lumière 28 la plus proche du dos 222, a une valeur comprise entre 1,5 et 2,2 mm, de préférence entre 1,70 et 1,80 mm.

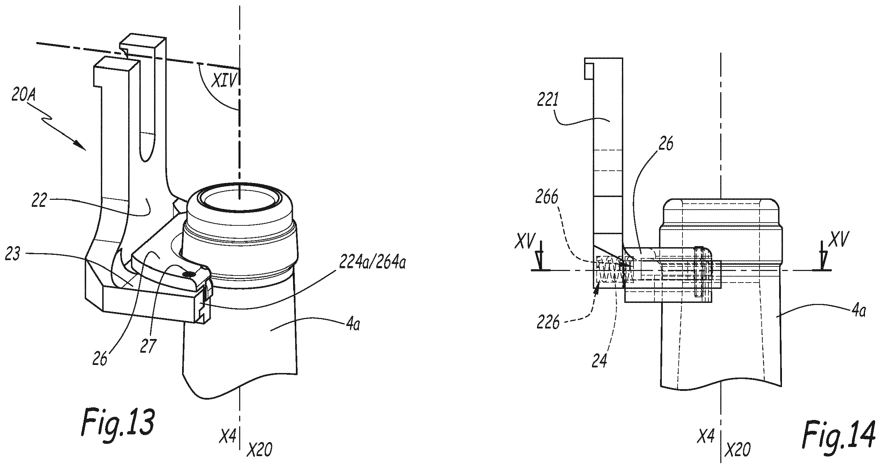

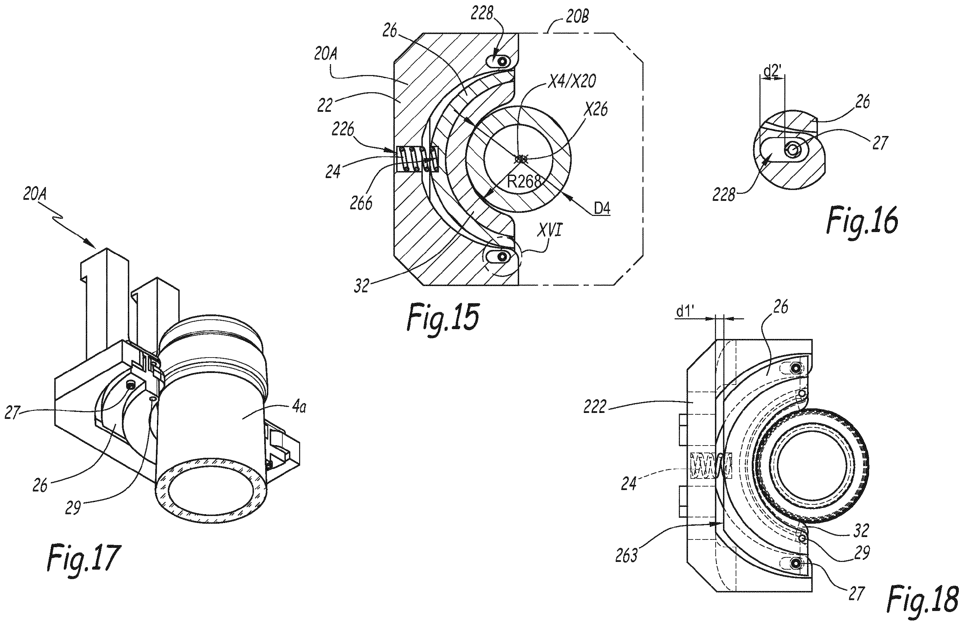

Dans la configuration des figures 13 à 18, le diamètre D4 est égal à 26 mm environ. Dans ces conditions, lorsque les deux mâchoires 20A et 20B sont en appui l'une sur l'autre comme représenté uniquement à la figure 15, l'insert 26 est moins repoussé vers le dos 222 que dans la configuration des figures 7 à 12, au point que la distance entre la face arrière 263 de l'insert 26 et ce dos 222 prend une valeur d1' comprise entre 1,75 et 2,25 mm, de préférence égale à 2 mm environ. Dans ce cas également, la distance entre la goupille 27 et l'extrémité de la lumière 228 la plus proche du dos 22 prend une valeur d2' comprise entre 2,75 et 3,25 mm, de préférence de l'ordre de 3 mm.

La structure des mâchoires 20A et 20B permet donc d'accommoder des cols dont le diamètre d4 peut prendre plusieurs valeurs notamment 26 et 28,3 mm.

Cette adaptabilité de la pince 20 résulte, d'autre part, de la possibilité de coulissement de l'insert 26 dans le sens des flèches F20, c'est-à-dire radialement à l'axe X20, grâce au montage des nervures 224a et 224b dans les rainures 264a et 264b.

Cette adaptabilité résulte également du caractère compressible de la garniture 32.

Lorsque la garniture 32 est usée, suite à de nombreuses fermetures/ouvertures de la pince 20 au cours d'une campagne de production de bouteilles 4, cette garniture peut être facilement échangée, en l'extrayant de la gorge 264 par un effort d'arrachement parallèle à la flèche F20, et en introduisant dans cette gorge 268 une nouvelle garniture 32 qui est retenue en position dans la gorge par coopération de formes compte tenu des géométries respectives de la garniture 32 et de la gorge 264. Une opération de maintenance de la pince 20 peut donc être réalisée directement dans la machine 2, c'est-à-dire sur le site d'utilisation de la pince 20, sans avoir à interrompre le fonctionnement de cette machine pendant une période de temps importante.

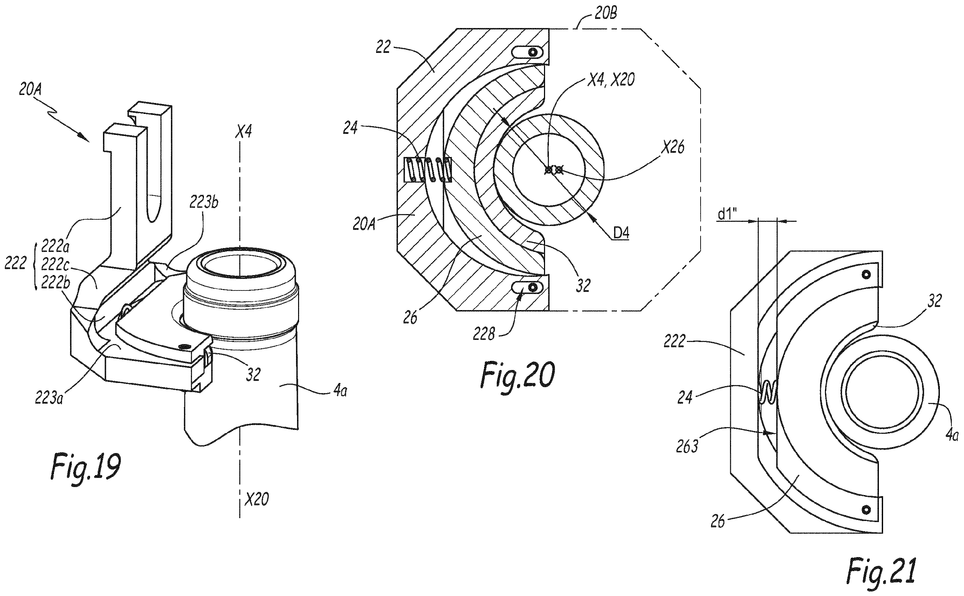

Dans le deuxième mode de réalisation de l'invention représenté aux figures 19 à 21, les éléments analogues à ceux du premier mode de réalisation portent la même référence. Dans ce qui suit, on décrit principalement ce qui distingue ce mode de réalisation du précédent.

Dans ce mode de réalisation, le dos 222 du support 22 est courbe, alors qu'il est plan dans le premier mode de réalisation.

Le dos 222 présente ici une première partie 222a parallèle à l'axe X20 et à partir de laquelle s'étendent les branches 220 et 221. Le dos 222 comprend également une deuxième partie 222b parallèle à l'axe X20, à partir de laquelle les bras 223a et 223b s'étendent perpendiculairement à l'axe X20. Le dos 22 comprend, en outre, une partie de liaison 222c qui relie les parties 222a et 222b et qui est oblique par rapport à l'axe X20, en divergeant de cet axe lorsqu'on se rapproche de la partie 222b.

Ceci permet d'accommoder un col 4a de bouteille dont le diamètre D4 peut avoir une valeur comprise entre 28 et 33 mm. Dans l'exemple représenté aux figures 19 à 21, le diamètre D4 vaut 29 mm environ et la distance entre la face arrière 263 de l'insert 26 et la surface en regard du dos 222 prend une valeur d1" comprise entre 4,6 et 5,1 mm, de préférence de l'ordre de 4,85 mm.

Les avantages mentionnés ci-dessus au sujet du premier mode de réalisation s'appliquent également au deuxième mode de réalisation des figures 19 à 21.

Selon une variante non représentée de l'invention, l'insert 26 peut comporter plusieurs gorges 268, avec une garniture 32 en place dans chaque gorge 268, pour maintenir le col 4a d'une bouteille 4 sur plusieurs zones superposées afin de garantir un non balancement de celle-ci à l'extraction de la bouteille du moule 8.

L'invention est représentée sur les figures lors de sa mise en œuvre pour des bouteilles dont le col 4a a un diamètre D4 compris entre 26 et 33 mm. Elle est toutefois applicable à des bouteilles ou flacons dont le col peut avoir un diamètre inférieur à 26 mm ou supérieur à 33 mm. Elle est également applicable à d'autres contenants, plus particulièrement en verre, notamment à des pots en verre ou dans un autre matériau, dont le col peut avoir un diamètre jusqu'à 120 mm.

Les modes de réalisation et variantes envisagés ci-dessus peuvent être combinés entre eux pour générer de nouveaux modes de réalisation de l'invention, dans le cadre des revendications ci-annexées.

## Revendications

1. Pince d'extraction (20) de contenants (4) par rapport à un moule (8) de conformation, cette pince comprenant deux mâchoires (20A, 20B) disposées de part et d'autre d'un axe central (X20) de la pince et incluant chacune un support (22) et un insert (26) monté flottant sur le support, en étant mobile en translation par rapport au support selon une direction (F20) radiale à l'axe central (X20), **caractérisée en ce que**, pour chaque mâchoire (20A, 20B) :
- l'insert est équipé d'au moins une gorge (268) de réception et de coincement d'une garniture (32) et
- une garniture compressible (32) est engagée dans chaque gorge (268) pour constituer une interface de prise du col (4a) d'un contenant.

2. Pince selon la revendication 1, **caractérisée en ce que** la garniture (32) est engagée de façon amovible dans la gorge (268).

3. Pince selon l'une des revendications précédentes, **caractérisée en ce que** la gorge (268) est en forme de tronçon d'arc de cercle, avec une profondeur (p268) comprise entre 2 et 3 mm.

4. Pince selon l'une des revendications précédentes, **caractérisée en ce que** la gorge (268) est équipée, au voisinage de ses extrémités, d'organes (29, 30) de retenue de la garniture (32), de préférence formés par des goupilles traversant la gorge selon une direction (X26c, X26d) parallèle à l'axe central (X20).

5. Pince selon l'une des revendications précédentes, **caractérisée en ce que** la garniture (32) est à section polygonale, notamment carrée, dont la une dimension transversale (h32) est comprise entre 110% et 130% de la largeur (ℓ268) de la gorge (268).

6. Pince selon l'une des revendications précédentes, **caractérisée en ce que** la garniture (32) est une tresse en fils dont le diamètre est compris entre 0,1 et 0,3 mm, de préférence égal à environ 0,15 mm, et qui sont réalisés en métal, de préférence en acier, ou en matériau synthétique, notamment en aramide ou para-aramide.

7. Pince selon l'une des revendications précédentes, **caractérisée en ce qu'**un premier organe, parmi le support (22) et l'insert (26), est pourvu d'au moins une nervure, de préférence deux nervures (224a, 224b), et le deuxième organe, parmi le support et l'insert (26), est pourvu d'une rainure (264a, 264b) de réception de chaque nervure, une nervure et la rainure associée formant des organes de guidage en translation de l'insert par rapport au support, selon la direction radiale (F20).

8. Pince selon la revendication 7, **caractérisée en ce que** la mâchoire comprend :
- un organe (24) de charge élastique (E24) de l'insert (26) en direction de la mâchoire opposée, notamment un ressort travaillant en compression et intercalé entre le support (22) et l'insert (26), et
- au moins un organe (27, 28) de limitation de la course de déplacement (F20) de l'insert par rapport au support, notamment une goupille solidaire de l'insert et engagée dans un logement (228) ménagé dans le support, ou une structure inverse.

9. Pince selon l'une des revendications précédentes, **caractérisée en ce que** le support (22) a une géométrie (222 ; 222a, 222b, 222c) adaptée au diamètre (D4) des cols (4a) des contenants (4) à extraire.

10. Machine de fabrication de contenants (4), cette machine comprenant au moins moule (8) de conformation de contenants et un mécanisme (14) d'extraction de contenants par rapport au moule, **caractérisée en ce que** le mécanisme d'extraction comprend au moins une pince (20) selon l'une des revendications précédentes.

## Patentansprüche

1. Greifer (20) zum Entfernen von Behältern (4) aus einem Formwerkzeug, wobei dieser Greifer zwei Klauen (20A, 20B) umfasst, die beidseitig einer Mittelachse (X20) des Greifers angeordnet sind und jede eine Halterung (22) und einen Einsatz (26), der schwimmend an der Halterung montiert ist, einschließt, wobei der Einsatz in Längsrichtung in Bezug auf die Halterung gemäß einer radialen Richtung (F20) zu der Mittelachse (X20) beweglich ist, **dadurch gekennzeichnet, dass** für jede Klaue (20A, 20B):
- der Einsatz mit mindestens einer Nut (268) zur Aufnahme und zum Einklemmen eines Belages (32) ausgerüstet ist und
- ein komprimierbarer Belag (32) in jede Nut (268) eingreift, um eine Grenzschicht zum Greifen des Halses (4a) eines Behälters zu bilden.

2. Greifer nach Anspruch 1, **dadurch gekennzeichnet, dass** der Belag (32) in die Nut (268) in lösbarer Weise eingreift.

3. Greifer nach einem der vorhergehenden Ansprüche, **dadurch gekennzeichnet, dass** die Nut (268) in Form eines Kreisbogenabschnittes mit einer Tiefe (p268) zwischen 2 und 3 mm ausgebildet ist.

4. Greifer nach einem der vorhergehenden Ansprüche, **dadurch gekennzeichnet, dass** die Nut (268) in der Nähe ihrer Enden mit Halteelementen (29, 30) des Belages (32) ausgerüstet ist, die vorzugsweise durch Stifte gebildet sind, die die Nut gemäß einer Richtung (X26c, X26d) parallel zur Mittelachse (X20) durchqueren.

5. Greifer nach einem der vorhergehenden Ansprüche, **dadurch gekennzeichnet, dass** der Belag (32) einen mehreckigen, vorzugsweise viereckigen Querschnitt aufweist, dessen eine Querabmessung (h32) zwischen 110 % und 130 % der Breite (l268) der Nut (268) beträgt.

6. Greifer nach einem der vorhergehenden Ansprüche, **dadurch gekennzeichnet, dass** der Belag (32) aus einem Geflecht aus Fäden besteht, deren Durchmesser zwischen 0,1 und 0,3 mm, vorzugsweise gleich ungefähr 0,15 mm betragen und die aus Metall, vorzugsweise Stahl, oder einem synthetischen Material, insbesondere Aramid oder para Aramid hergestellt sind.

7. Greifer nach einem der vorhergehenden Ansprüche, **dadurch gekennzeichnet, dass** ein erstes Element von der Halterung (22) und dem Einsatz (26) mit einer Rippe, vorzugsweise zwei Rippen (224a, 224b) versehen ist und das zweite Element von der Halterung und dem Einsatz (26) mit einer Nut (264a, 264b) zur Aufnahme jeder Rippe versehen ist, wobei eine Rippe und die zugeordnete Nut Führungselemente in Längsrichtung des Einsatzes in Bezug auf die Halterung gemäß einer radialen Richtung (F20) bilden.

8. Greifer nach Anspruch 7, **dadurch gekennzeichnet, dass** die Klaue umfasst:
- ein Element (24) zur elastischen Vorspannung (E24) des Einsatzes (26) in Richtung der gegenüberliegenden Klaue, insbesondere eine in Kompression arbeitende Feder, die zwischen der Halterung (22) und dem Einsatz (26) liegt, und
- mindestens ein Element (27, 28) zur Begrenzung des Verschiebeweges (F20) des Einsatzes in Bezug auf die Halterung, insbesondere einen mit dem Einsatz verbundenen Ansatz, der in eine in der Halterung eingearbeitete Aufnahme (228) eingreift oder einen umgekehrten Aufbau.

9. Greifer nach einem der vorhergehenden Ansprüche, **dadurch gekennzeichnet, dass** die Halterung (22) eine Geometrie (222; 222a, 220b, 222c) aufweist, die an den Durchmesser (D4) der Hälse (4a) der zu entfernenden Behälter (4) angepasst ist.

10. Maschine zum Herstellen von Behältern (4), wobei diese Maschine mindestens ein Formwerkzeug (8) für Behälter und einen Mechanismus (14) zum Entfernen von Behältern aus dem Formwerkzeug umfasst, **dadurch gekennzeichnet, dass** der Mechanismus zum Entfernen mindestens einen Greifer (20) nach einem der vorhergehenden Ansprüche umfasst.

## Claims

1. Extraction clamp (20) for extracting containers (4) from a shaping mould (8), the clamp comprising two jaws (20A, 20B) which are arranged on either side of a central axis (X20) of the clamp and each include a support (22) and an insert (26) which is mounted in a floating manner on the support while being movable in translation relative to the support in a direction (F20) radial to the central axis (X20), **characterised in that**, for each jaw (20A, 20B):
- the insert is equipped with at least one throat (268) for receiving and clamping a lining (32) and
- a compressible lining (32) is engaged in each throat (268) in order to constitute an interface for gripping the neck (4a) of a container.

2. Clamp according to claim 1, **characterised in that** the lining (32) is engaged in a removable manner in the throat (268).

3. Clamp according to any one of the preceding claims, **characterised in that** the throat (268) is in the form of a portion of an arc of a circle, with a depth (p268) of between 2 and 3 mm.

4. Clamp according to any one of the preceding claims, **characterised in that** the throat (268) is equipped, in the region of its ends, with members (29, 30) for holding the lining (32), which members are preferably formed by pins extending through the throat in a direction (X26c, X26d) parallel to the central axis (X20).

5. Clamp according to any one of the preceding claims, **characterised in that** the lining (32) is polygonal, especially square, in cross-section, the one transverse dimension (h32) of which is between 110% and 130% of the width (ℓ268) of the throat (268).

6. Clamp according to any one of the preceding claims, **characterised in that** the lining (32) is a plait of threads whose diameter is between 0.1 and 0.3 mm, preferably equal to approximately 0.15 mm, and which are made of metal, preferably of steel, or of synthetic material, especially of aramid or para-aramid.

7. Clamp according to any one of the preceding claims, **characterised in that** a first member from among the support (22) and the insert (26) is provided with at least one rib, preferably two ribs (224a, 224b), and the second member from among the support and the insert (26) is provided with a groove (264a, 264b) for receiving each rib, a rib and the associated groove forming members for guiding the insert in translation relative to the support, in the radial direction (F20).

8. Clamp according to claim 7, **characterised in that** the jaw comprises:
- a member (24) for resiliently loading (E24) the insert (26) in the direction of the opposite jaw, especially a compression spring interposed between the support (22) and the insert (26), and
- at least one member (27, 28) for limiting the travel (F20) of the insert relative to the support, especially a pin secured to the insert and engaged in a receiver (228) formed in the support, or a reverse structure.

9. Clamp according to any one of the preceding claims, **characterised in that** the support (22) has a geometry (222; 222a, 222b, 222c) adapted to the diameter (D4) of the necks (4a) of the containers (4) to be extracted.

10. Machine for manufacturing containers (4), this machine comprising at least one mould (8) for shaping containers and a mechanism (14) for extracting containers from the mould, **characterised in that** the extraction mechanism comprises at least one clamp (20) according to any one of the preceding claims.
